# EUROPEAN PATENT APPLICATION

(11) **EP 4 715 136 A2**
(43) Date of publication of application: **25.03.2026**
(21) Application number: 25198813.5
(22) Date of filing: 28.08.2025
(51) Int. Cl.: E04B 2/74, E04B 2/78

(54) **PERMANENT DRYWALL COMPRISING BOARD SEPARATED BY A GAP OF CONTROLLED WIDTH**

(30) Priority: 28.08.2024 EP 24197022
(71) Applicant: Etex Building Performance International SAS, 84915 Avignon (FR)
(72) Inventor: MAILLE, Gaël, 30390 Theziers (FR)
(74) Representative: Etex Services NV - Etex IPSC

(57) **Abstract**

The present invention concerns a kit-of-parts configured to form a continuously smooth permanent drywall comprising first and second boards (1) and a beam (3) comprising a web and a first flange. The drywall is formed by inserting the first flange of the beams into grooves provided on the vertical edges of the first and second boards. The beam and grooves are so dimensioned as to automatically ensure that the gap separating the first and second boards when the flange is fully inserted into the grooves has a predefined gap width, L11 within a nominal tolerance, y.The gap width can be controlled by controlling the thickness, Lw, of the web or by dimensioning the first flange so as to abut against an end wall of the grooves a the predefined gap width, L11. Regular and reproducible gaps facilitate the building of a visually smooth permanent drywall.

## Description

### TECHNICAL FIELD

The present invention concerns a permanent partition wall or permanent wall lining, collectively referred to as permanent drywalls of the type comprising a series of boards to be coupled to a frame made of beams side-by-side in a row and separated from one another by a gap. The gap is configured to be filled with a joint composition to yield a visually smooth surface. The boards and beams of the present invention are designed for an easy assembly allowing a width of the gap, L11, separating every two adjacent boards to be automatically controlled within a predefined nominal tolerance, y. The present invention facilitates installation of permanent partition walls or wall linings by amateur home carpenters or do-it-yourselfers (DIYer) rather than relying on professional installers.

### BACKGROUND OF THE INVENTION

Refurbishing an interior of a building can comprise knocking down existing walls and building new partition walls and wall linings. A partition wall is a non-load bearing wall which divides a space into two sub-spaces separated from one another.

Partition walls generally have two visible surfaces and may comprise insulation material, piping, or cables hidden from view. Wall linings are used for cladding an existing wall, e.g., to enhance the appearance of the existing wall, for insulating the existing wall, or for hiding piping or cables running along the existing wall. Wall linings can also include ceilings and, in some cases, floors. Wall linings only have one visible surface. Partition walls and wall linings are commonly referred to as drywalls without distinction. Permanent drywalls are to be distinguished from relocatable partition walls which can be removed easily, as commonly used in modulable offices for rent. An example of relocatable drywall is described in US4329820. Permanent drywalls are designed to remain in place by opposition to relocatable drywalls. In particular, the term "permanent" imposes that the drywall complies with minimum mechanical requirements defined by national laws, such as NF_DTU25.41P1-1 (2012) chapter 5.2 in France. Because relocatable drywalls must be easily dismounted, the gaps separating adjacent boards are not filled with a joint composition to yield an optically smooth, homogeneous surface but are instead either left open or closed with a removable T-shaped plastic strip. By contrast, permanent drywall must give an overall smooth visual appearance, hiding the joints between individual boards, by filling the gaps separating with a joint composition and painting or applying a wallpaper.

The present invention does not address relocatable drywalls and concerns permanent drywalls only, whose gaps between adjacent boards must be filled with a joint composition to yield a smooth and visually planar and homogeneous surface.

Without using heavy materials, such as concrete, bricks, blockworks, or the like, partition walls and wall linings are generally formed by a support frame supporting boards made of e.g., plaster (= calcium sulphate dehydrate), cement, wood, plywood, metal, or the like. The rear surfaces of the boards are fixed with screws against a frame generally made of metallic or wooden beams. Because of wood shortage and higher fire resistance, however, metallic beams are often preferred.

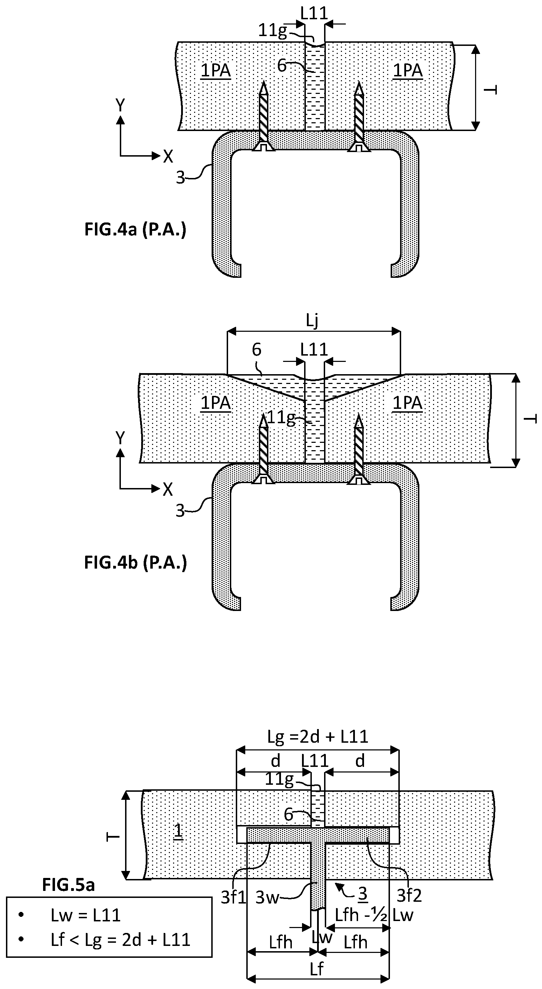

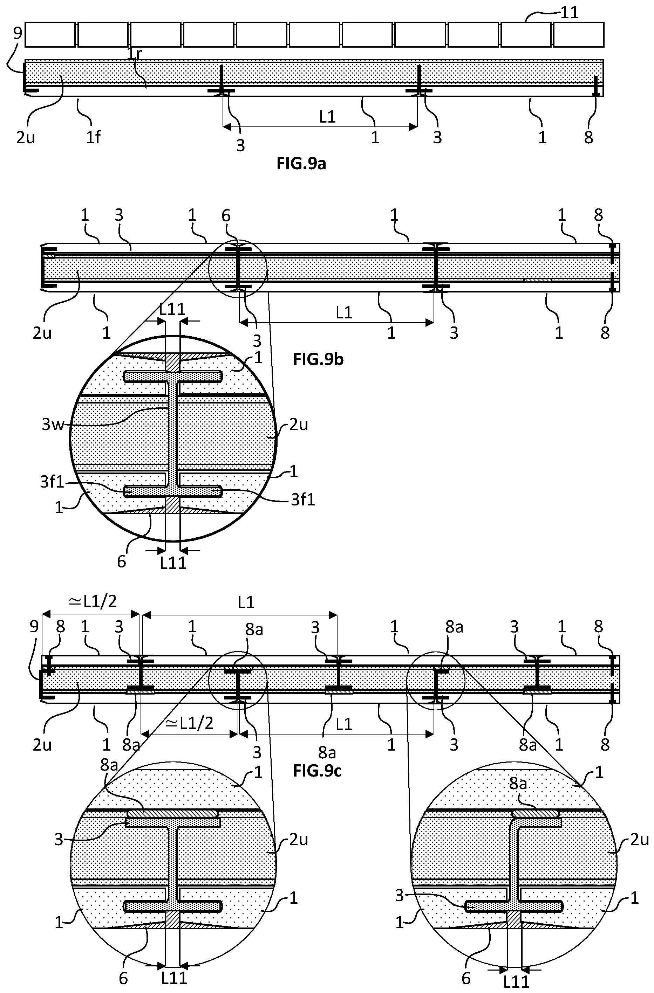

The metallic beams generally comprise top U-profile tracks fixed to a top position, such as a ceiling, and a bottom U-profile track fixed to a bottom position, generally a floor. In conventional drywall systems, studs (e.g., U-studs) cut to a length corresponding to a height of the partition wall can be screwed in place to the top and bottom U-profile tracks to form a frame. As shown in Figures 4a and 4b representative of conventional drywall systems, the rear surfaces of the boards are fixed against the studs with screws. The frame can be designed to incorporate openings for windows and doors, requiring more cutting to size and screwing in place of the metallic studs. The boards can then be fixed side-by-side in a row to the frame with screws, thus securing the boards to the top and bottom U-profile tracks and to the vertical U-stud. In partition walls, boards are screwed on both sides of the frame, whilst in wall linings and ceilings, boards are screwed to one side only of the frame (cf. Figures 9a (= wall lining) and 9b & 9c (= partition wall). The numerous screws required to fix the boards to the frame must be hidden with a gap filling composition, a tedious and not so easy operation. The vertical beams (or studs) may comprise openings in the webs thereof to allow the passage of piping and cables along a length of the partition wall or wall lining.

Once the boards are screwed in place on one or both sides of the frame, the joints between adjacent boards are sealed with a joint composition and optionally covered by an adhesive paper tape to give the drywall an overall smooth visual aspect, hiding the joints and giving the drywall a continuous or monolithic aspect.

Although building a drywall is considered by professional builders as a relatively simple operation, only well-trained amateur home carpenters dare building a permanent drywall on their own. To simplify the building of a permanent drywall, several solutions were proposed in the art. For example, US4231205 describes a steel edged gypsum wall panel engageable by flanged studs. Steel edges with a specific design are coupled to the edges of a panel. Flanged studs can be engaged into the steel edges to fix the panels and form the drywall. The steel edges considerably increase the cost and weight of the boards and are not designed to yield a visually smooth and homogeneous surface between adjacent boards. EP4039903 and WO2024/028320 describe panels provided with grooves on their vertical edges dimensioned to snugly fit the flanges of a stud having a T- or I-profile requiring the use of little to no screws. The vertical edges of the boards are tapered to allow offsets between the front surfaces of adjacent panels to be smoothened with the joint composition.

A recurrent challenge when building a drywall by aligning a plurality of boards is to give the drywall an overall continuously smooth appearance after filling the gaps with a joint composition. Two major challenges are faced by DIYers to achieve a smooth looking surface. First, because of a limited control on the nominal thickness, T, of the boards, the planar portions of two adjacent boards may be on slightly offset wall planes (X, Z), forming a step at the level of the joints which must be planarized by application of the joint composition. For example, NF-EN520+A1 (2009) (= EN520) defines on p.15, §4.9.1.3 that the tolerance,*δ*, on the nominal thickness, T, of plasterboards is of the order of *δ* = ±0.6 mm. To visually smoothen an offset between the planar portion of two adjacent boards with a joint composition, the joint width, Lj, is increased by including tapered portions of taper width, Lt, joining the vertical edges to the planar portion of the boards (cf. Figure 4b, with Lj = 2Lt + L11).

Second, if not carefully monitored, the gap separating two boards can have a gap width, L11, measured along the X-axis, which can vary substantially between two pairs of adjacent boards. Varying gap widths, L11, create a serious inconvenient because, on the one hand, if the gap width, L11, is too large, a larger quantity of joint composition must be used to fill in the gap, and as shown in Figures 4a and 4b, a dip can be formed at the surface of the joint composition, due to excess shrinkage. This can only be corrected by application of several layers of joint composition which is time consuming. On the other hand, if the gap width, L11, is too narrow, the joint composition can crack more easily in a thinner gap of a drywall exposed to impact, thus degrading the visual appearance of the permanent drywall and mechanical properties of the joint. Furthermore, if the joint width, Lj = 2Lt + L11, is too small, it is more difficult to flatten the joint portion with a joint composition in case of an offset between the planar portions of adjacent boards to obtain a visually smooth gap portion. Referring to Figures 4a and 4b, representative of the prior art, there is no control on the gap width, L11, when screwing the boards to the studs. Spacers can be temporarily distributed over the height of the gap between adjacent boards to control the gap width, L11, but they are seldom used because they are tedious to install and it is very difficult to prevent their falling off the gap when handling the boards.

There therefore remains a need for a foolproof system for easily and reproducibly building a permanent drywall with an automatic control of the gap width, L11, separating every two adjacent boards and allowing an easier and more reproducible application of joint compositions to fill the gaps and yield a continuously smooth drywall front surface. The present invention proposes a solution for substantially simplifying the building of a permanent drywall, automatically controlling the gap width, L11, between every two adjacent boards and thus facilitating the filling of the gaps between adjacent boards to obtain a smooth surface, so that amateur DIYers can now easily build a smooth and visually planar permanent drywall. These and other advantages of the present invention are presented in continuation.

### SUMMARY OF THE INVENTION

The present invention is defined in the appended independent claims. Preferred embodiments are defined in the dependent claims. In particular, the present invention concerns a kit-of-parts for forming a portion of a continuously smooth permanent drywall. The kit-of-parts comprises first and second boards. Each board has a rectangular geometry and comprises,
- a front surface comprising a planar portion parallel to a wall plane (X, Z) and separated from a rear surface parallel to the wall plane (X, Z) by a nominal thickness, T, measured along a Y-axis normal to the wall plane (X, Z),
- a peripheral edge defining the rectangular geometry and comprising first and second longitudinal edges of length, L1, extending along the X-axis, normal to and separated from one another by first and second vertical edges of board height, H1, extending along the Z-axis, and wherein
- a groove extending parallel to the wall plane (X, Z) along each of the first and second vertical edges, each groove having an opening width, w, measured normal to the wall plane (X, Z), and a depth, d, measured parallel to the longitudinal axis (X),

The kit-of-parts also comprises a beam comprising a web normal to and centred on a first flange and optionally to a second flange forming a T-profile or a I-profile, or a h-profile wherein,
- the first flange has a length, Lf; measured along the X-axis and has a thickness, Tf, measured along the Y-axis substantially equal to the opening width, w, of the grooves of the first and second boards, such as to fit snugly in the grooves of each of the first and second boards, and
- the web has a thickness, Lw, measured along the X-axis.

The first flange of the beam comprises,
- a first half-flange eof length Lfh and configured to snugly fit in the groove of the first board and
- a second half-flange of length Lfh and configured to snugly fit in the groove of the second boards, such that the planar surfaces of the first and second boards are substantially planarly aligned and wherein the vertical edges of the first and second boards are parallel to one another and separated from one another by a gap of width, L11),measured along the X-axis.

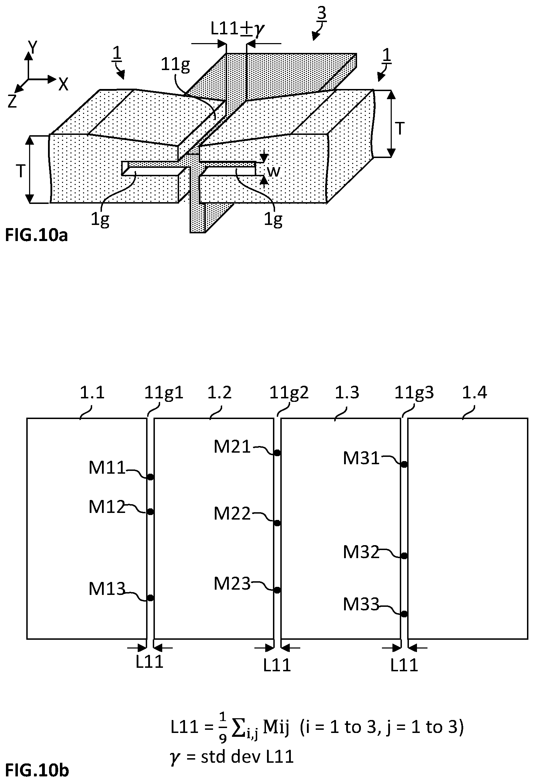

The kit-of-parts of the present invention differs from the state of the art at least in that the grooves) of the first and second boards and the beam are so dimensioned as to ensure that the gap width, L11, is repeatedly controlled to reach a predefined value L11 within a nominal tolerance, *γ* ≤ ±0.6 mm, preferably *γ* ≤ ±0.4 mm, more preferably, *γ* ≤ ±0.2 mm, and wherein the predefined value of L11 is comprised between 2.5 and 10 mm, preferably between 3 and 7 mm, more preferably between 4 and 6 mm. The nominal tolerance is determined as described in Figure 10b: a total of 9 measurements between 4 boards are conducted:3 x measurements between two successive boards.

In a preferred embodiment, each one of the first and second boards comprises a core sandwiched between two facers, usually a fibre fabric with a binder. The core preferably comprises at least 50 wt.% of calcium sulphate dihydrate relative to the core weight thus defining a plasterboard, preferably the plasterboard comprises at least 80 wt.% of calcium sulphate dihydrate. For example, the core can comprise at least 70 wt.% gypsum, preferably at least 80 wt.% of gypsum relative to the total weight of the plasterboard. The plasterboard preferably has a density comprised between 0.5 and 1.2 g / cm³, preferably between 0.6 and 0.8 g / cm³. Alternatively, the core can comprise at least 50 wt.% of calcium silicate, or made of fibre-cement.

To control the gap width, L11, within the nominal tolerance, y, the grooves of the first and second boards and the beam can be dimensioned such that,
- The web thickness, Lw, alone controls the gap width, L11, by controlling the dimensions such that, Lw = L11 and Lf < Lg = L11 + 2d, or
- The combination of the flange length, Lf, with the groove depth, d, alone controls the gap width, L11, by controlling the dimensions such that, Lf = Lg = L11 + 2d, and Lw < L11, or
- Both web thickness, Lw, and combination of the flange length, Lf, with the groove depth, d, control in combination the gap width, L11, by controlling the dimensions such that, Lf = Lg = L11 + 2d, and Lw = L11.

For example, the flange length, Lf, can be comprised between 16 and 150 mm, preferably between 20 and 70 mm, more preferably between 24 and 50 mm and / or the groove depth, d, is comprised between 10 and 30 mm, more preferably d = 12 to 20 mm.

In a preferred embodiment, each of the first and second vertical edges of the first and second boards has an edge thickness, Te < T, measured along the Y-axis and is coupled to the planar portion of the front surface by a tapered portion of taper width, Lt, measured along the X-axis. For example, the edge thickness, Te, can be comprised between 8 and 45 mm, preferably between 12 and 35 mm, more preferably between 14 and 30 mm, a preferred edge thickness is comprised between 15 and 22 mm.

The distance, Tg, separating the groove from the planar portion of the front surface measured along the Y-axis can be comprised between 30 and 70% of the nominal thickness, T (i.e., Tg = 0.3 T to 0.7 T). The groove width, w, can be comprised between 1 and 10 mm, preferably between 1.5 and 6 mm, more preferably 2 mm ± 0.3 mm.

The present invention also concerns a portion of a continuously smooth permanent drywall comprising the elements of the kit-of-parts defined supra assembled as follows,
- the first half-flange of the beam is fully inserted into the groove of the first board until it cannot penetrate any further,
- the second half-flange of the beam is fully inserted into the groove of the second board, until it cannot penetrate any further,

The first and second boards are thus held side by side with a vertical edge of the first board being parallel to and separated from a vertical edge of the second board by a distance, L11, of a given value comprised between 3 and 7 mm, preferably between 4 and 6 mm and within the nominal tolerance, tolerance, | *γ* | ≤ 0.4 mm, preferably, | *γ* | ≤ 0.4 mm, more preferably, | *γ* | ≤ 0.2 mm.

The present invention also concerns a method for installing a permanent partition drywall or permanent wall lining extending along an X-axis. The method comprises the following steps.
- providing a kit-of-parts as defined supra,
- fixing side by side one or more top U-profile tracks to a top position, extending along the X-axis with the U- opening facing towards a bottom position,
- fixing side by side one or more bottom U-profile tracks to the bottom position, preferably to a floor, extending along the X-axis with the U-opening facing towards the top position, and aligned relative to the Z-axis with the one or more top U-profile tracks,
- positioning the first board against a first side of one of the one or more top U-profile tracks and against a first side of one of the one or more bottom U-profile tracks with the planar portion facing away from the top and bottom U-profile tracks, and optionally fixing the first board to the first side of the top U-profile track,
- fully engaging the first half-flange of the beam into the groove of the first vertical edge of the first board, until it cannot penetrate any further
- positioning the second board with the first vertical edge thereof next to the first vertical edge of the first board, against the first side of one of the one or more top U-profile tracks and against the first side of one of the one or more bottom U-profile tracks with the planar portion facing away from the top and bottom U-profile tracks, and with the second half-flange of the beam fully engaged in the groove of the first vertical edge of the second board until it cannot penetrate any further, to form a permanent drywall portion made of first and second boards separated from one another by a gap of the given value L11 comprised between 3 and 7 mm, preferably between 4 and 6 mm and within the nominal tolerance, *γ* ≤ ±0.4 mm, preferably, *δ* ≤ ±0.2 mm,
- optionally fixing the second board (1) to the top U-profile track,
- repeating the foregoing steps until the permanent partition drywall or permanent wall lining is completed.

To build a permanent partition drywall with both sides being visible, the beam can be in the form of a I-profile or a h-profile with first and second flanges separated by the web, and wherein the same steps as described supra are repeated on a second side of the top and bottom U-profile tracks to form a permanent drywall.

The present application also concerns a process for producing a plasterboard as defined supra, comprising
- feeding a gypsum slurry comprising stucco, water, and additives onto a bottom facer laid on a conveyor in motion,
- applying a top facer onto a free surface of the gypsum slurry to form a sandwich structure with a core made of the gypsum slurry sandwiched between the top and bottom facers,
- setting by hydration the gypsum slurry forming the core to form a setting board on the conveyor,
- cutting the setting board to desired dimensions to yield cut boards,
- drying the cut boards in a drying station to yield the boards,

The process differs from the prior art at least in that, after the setting of the gypsum slurry the grooves are formed by machining with a rotating cutting tool, preferably by milling, along each vertical edge of the setting board or of the cut boards or of the boards, by controlling the distance of the cutting tool relative to the vertical edge to ensure that the groove depth, d, has a predefined value such that a difference, Lf - 2d, between the flange length, Lf, of the beam to twice the groove depth, d, is equal to the gap width, L11, within the predefined nominal tolerance, *y,* on the gap width (i.e., Lf - 2d = L11 ±*γ*)*.*

The grooves are preferably formed by milling with a milling cutter whose position along the X-axis relative to the vertical edge is controlled by a measuring system, as this technique allows the groove depth, d, to be controlled within great accuracy (i.e., low nominal tolerance, *γ*).

### BRIEF DESCRIPTION OF THE FIGURES

For a fuller understanding of the nature of the present invention, reference is made to the following detailed description taken in conjunction with the accompanying drawings in which:
**Figure 1a** shows an exploded view of a first board and beams forming the frame, including top and bottom C-profiles and a beam with flanges forming an I-profile.
**Figure 1b** shows the first board fixed to the top C-profile and with the flanges of the beams being inserted into the grooves of the first board and of a second board.
**Figure 1c** shows a portion of permanent drywall comprising first and second boards fixed to the top C-profile and coupled to one another with good alignment by means of the flanges of the beams being engaged in the corresponding grooves of the boards.
**Figure 2a** shows a perspective view of the edge of a board, with groove and tapered portion.
**Figure 2b** shows a perspective view of the edges of two boards according to Figure 2a coupled to one another by a beam (3) and separated from one another by a gap of width, L11.
**Figures 3a to 3c** show a beam with one or two flanges forming (a) a T-profile, (b) an I-profile, and (c) a h-profile.
**Figures 4a and 4b** show prior art boards, with no automatic control of the gap width, L11, with the risk of a dip forming at the surface of the joint composition over the gap, (a) square edged boards, and (b) tapered edged boards.
**Figures 5a to 5d** show various embodiments for automatically controlling the gap between two adjacent boards, (a) Lw = L11 and Lf < Lg, (b) Lw < L11 and Lf = Lg, and (c) Lw = L11 and Lf = Lg, and (d) same as (c) with tapered edges, wherein Lw is the web thickness, Lf is the flange length, Lg is the groove span with Lg = 2d + L11, L11 is the gap width, and d is the groove depth, all measured along the X-axis.
**Figure 6** shows a board according to the present invention.
**Figures 7a to 7f** show various embodiments of the tapered portion of boards.
**Figures 8a and 8b** show two embodiments of processes for producing a board according to the invention.
**Figure 8c** is a cut C - C of Figures 6a and 6b showing one way of moulding the tapered portions of the boards.
**Figure 8d** is a cut D - D of Figures 6a and 6b showing one way of forming the grooves by milling with a control of the groove depth, d.
**Figure 9a** shows a top view of a wall lining hiding an existing wall and comprising boards coupled side-by-side to the one side of the frame in good alignment and forming a smooth surface after application of a joint composition.
**Figures 9b and 9c** show top views of two embodiments of a partition wall comprising boards coupled to both sides of the frame with the boards coupled side-by-side to the frame in good alignment and forming smooth surfaces on both sides of the partition wall after application of a joint composition.
**Figure 10a** shows a perspective cut view of a joint portion between two adjacent boards coupled to one another by beam inserter in the grooves of the boards and defining a gap of gap width, L11 ±*γ*.
**Figure 10b** shows the method for determining the values of the gap width, L11, and of the nominal tolerance, *γ*.

### DETAILED DESCRIPTION OF THE INVENTION

The present invention concerns a kit-of-parts for forming a continuously smooth permanent drywall. The kit-of-parts comprises first and second boards (1) and a beam (3). Each of the first and second boards (1) has a rectangular geometry and comprises a front surface comprising a planar portion (1f) parallel to a wall plane (X, Z) and separated from a rear surface (1r) parallel to the wall plane (X, Z) by a nominal thickness, T, measured along a Y-axis normal to the wall plane (X, Z). Each board (1) comprises a peripheral edge defining the rectangular geometry and comprising first and second longitudinal edges of length, L1, extending along the X-axis, normal to and separated from one another by first and second vertical edges of board height, H1, extending along the Z-axis. Each vertical edge is provided with a groove (1g), extending parallel to the wall plane (X, Z) along each of the first and second vertical edges, each groove having a groove width, w, measured along a Y-axis normal to the wall plane (X, Z), and a depth, d, measured parallel to the X-axis.

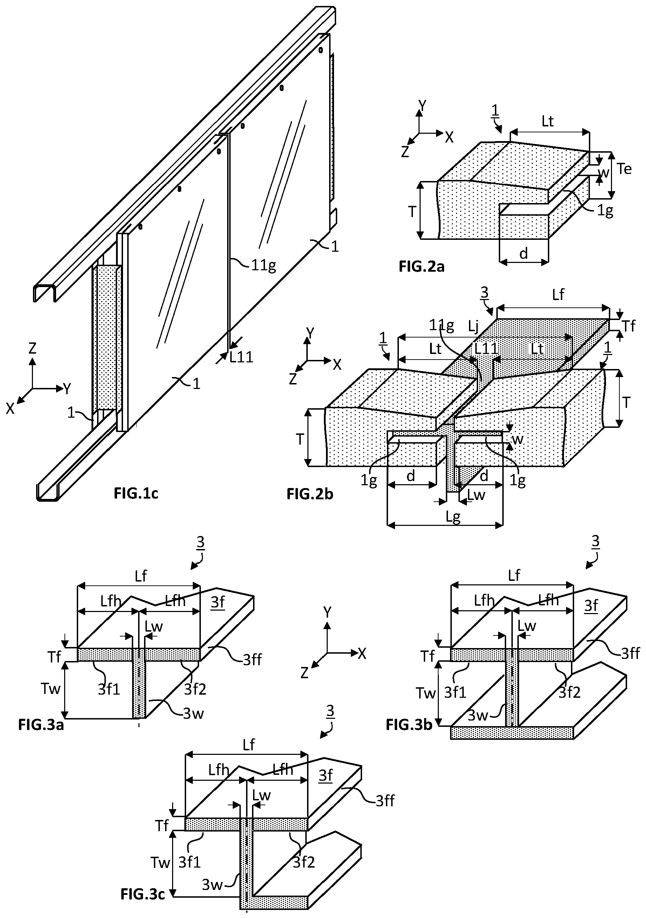

The beam (3) comprises a web (3w) extending along the Y-axis and normal to and centred on a first flange (3f) and optionally normal to a second flange forming a T-profile or a I-profile or a h-profile as illustrated in Figures 3a to 3c. The various dimensions of the beam (3) are identified in Figure 3a to 3c. The web (3w) has a thickness, Lw, measured along the X-axis. The first flange (3f) has a length, Lf; measured along the X-axis and has a thickness, Tf, measured along the Y-axis. The first flange (3f) of the beam (3) comprises a first half-flange (3f1) of length, Lfh, and of the thickness, Tf, configured to snugly fit in the groove (1g) of the first board and comprises a second half-flange (3f2) identical to the first half-flange of length, Lfh, and of the thickness, Tf, configured to snugly fit in the groove (1g) of the second boards (1), such that the planar surfaces (1f) of the first and second boards are substantially planarly aligned and wherein the vertical edges of the first and second boards are parallel to one another and separated from one another by a gap (11g) of gap width (L11) measured along the X-axis.

The gist of the invention is to so dimension the grooves (1g) of the first and second boards (1) and the beam (3) as to ensure that the gap width, L11, is repeatedly controlled to a predefined value of L11 within a nominal tolerance, *γ* ≤ ±0.4 mm, preferably, *γ* ≤ ±0.2 mm. The "nominal tolerance", *y,* assumes a perfect insertion of the first and second half-flanges (3f1, 3f2) into the grooves (1g) and / or a perfect contact of the vertical edges against the web (3w) of the beams (3). In practice, conditions are not ideal in a working site (e.g., with floors, ceilings and walls which are not straight, awkward access to some portions of the drywall), and the gap width, L11, varies within an "actual tolerance", *γa* ≥ *γ.* The actual tolerance, *γa*, strongly depends on the operator and on the working site. A professional operator can easily achieve an actual professional tolerance, *γa*(pro), equal to the nominal tolerance, *γ*, provided the walls, floor, and ceilings of the area where the permanent drywall is built are perfectly planar and square relative to one another (i.e., *γa*(pro) = *γ*). By contrast, an amateur DIYer can aim to an actual DiYer's tolerance, *γa*(DiY), of not less than about 150% of the nominal tolerance, *γ* (i.e., *γa*(DIY) ≥ 1.5 *γ*). Such actual tolerances values are very good for both professionals and DIYers and substantially smaller than with state of the art drywall systems of the type illustrated in Figures 4a and 4b. The predefined value of L11 is a value comprised between 3 and 7 mm, preferably between 4 and 6 mm, more preferably between 4.5 and 5.5 mm, more preferably, L11 = 5 mm.

The present invention aims to automatically and repeatedly control the gap width, L11, of the gap (11g) between two adjacent boards coupled to one another by the beam (3). This is achieved by dimensioning the grooves (1g) and beam's first flange (3f) such that when fully engaging the first and second half-flanges (3f1, 3f2) into the grooves (1g) of the corresponding first and second boards until the half-flanges cannot penetrate any deeper into the grooves, the gap (11g) automatically has the predefined gap width, L11, of the predefined value within the nominal tolerance, *γ*. The first and second half-flanges cannot penetrate any deeper into the grooves (1g) because the first and second half-flanges abut against end-walls of the grooves and / or because the vertical edges of the boards abut against the web (3w) of the beam (3).

### THE BOARDS (1)

### The Board (1) - Geometry

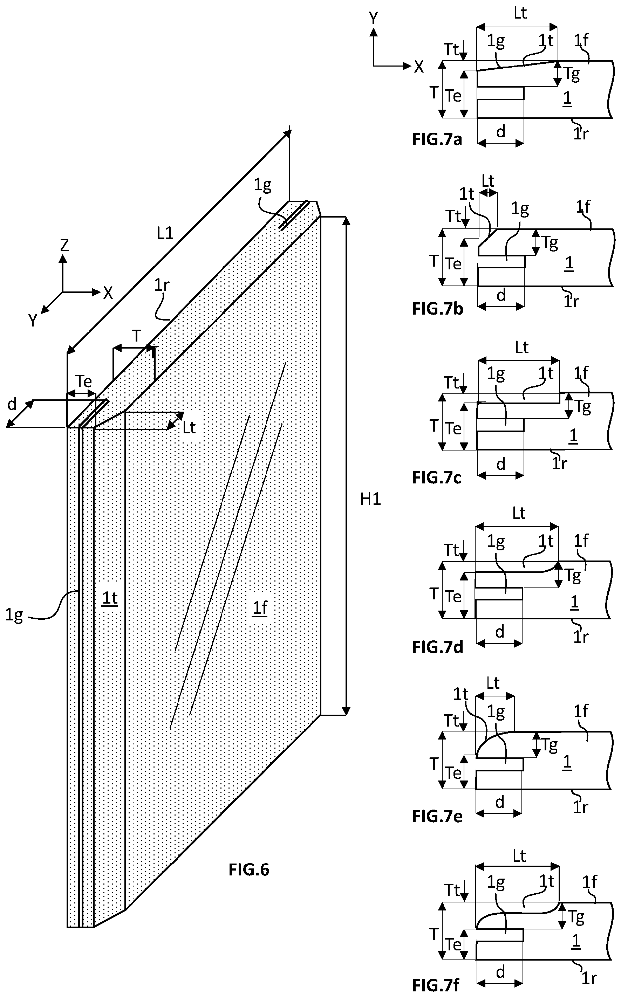

As shown in Figure 6, the board (1) of the invention has a rectangular geometry, comprising front and rear main surfaces. The front surface comprises a planar portion (1f). The planar portion (1f) and the rear surface (1r) are parallel to the wall plane (X, Z) and separated from one another by a nominal thickness, T, measured along the Y-axis normal to the wall plane (X, Z).

The board preferably comprises a core (1c) sandwiched between bottom and top facers (21, 22). The core (1c) can comprise at least 50 wt.% of calcium sulphate dihydrate (= gypsum) thus defining a plasterboard. Alternatively, the core (1c) can comprise at least 50 wt.% of calcium silicate, or is made of fibre-cement. The core (1c) can comprise additives as conventionally used in the art. The present invention is not restricted to any particular selection of additives. The plasterboard preferably comprises at least 70 wt.%, more preferably at least 80 wt.% of calcium sulphate dihydrate relative to the total weight of the plasterboard. The plasterboards preferably have a density comprised between 0.5 and 1.2 g / cm³, more preferably between 0.6 and 0.9 g / cm³, more preferably between 0.7 and 0.8 g / cm³. In one embodiment, the first and second boards are plasterboards comprising at least 70 wt.% gypsum, preferably at least 80 wt.% of gypsum relative to the total weight of the plasterboard, and having a density comprised between 0.5 and 1.2 g / cm³, preferably between 0.6 and 0.8 g / cm³. The core (1c) can comprise other components such as starch, PVA, foaming agents, reinforcing fibres, and the like. For example, a board core made of calcium sulphate dihydrate can comprise between 70 and 94 wt.% calcium dihydrate relative to the core weight. Additives such as starch, polyvinyl acetate (PVA), a foaming agent, and reinforcing fibres (e.g., glass fibres) can be added to the core composition.

The nominal thickness, T, of the boards measured between the planar portion (1f) of the front surface and the rear surface (1r) can be comprised between 12 and 50 mm, preferably between 18 and 40 mm, more preferably between 20 and 35 mm, more preferably between 25 and 30 mm. A preferred nominal thickness, T, is comprised between 18 and 25 mm. Because of the process for producing plasterboards, the nominal thickness, T, has a tolerance, ±δ = ±0.6 mm according to NF-EN520+A1 (2009) (= EN520), which cannot be reduced substantially without changing the process of production of the boards, which is not the purpose of the present invention.

The tolerance, *δ*, can be determined by measuring the nominal thickness, T, of a representative number of boards (1). In practice, the tolerance, *δ*, on the nominal thickness, T, can be determined by measuring the nominal thickness, T, at 3 points randomly selected over the planar surface (1f) of a board and repeating the operation on three boards (1) to yield nine values of the nominal thickness, T (= 3 T-values measured on 3 boards). The T-values thus measured are averaged to yield the nominal thickness, T, and the standard deviation is determined and defined as the tolerance, *δ*.

### The Board (1) - Edges and Tapered Portion (1t)

The peripheral edge defines the rectangular geometry of the board (1). As shown in Figure 6, the peripheral edge comprises first and second longitudinal edges of length, L1, extending along the X-axis, separated from one another by and normal to first and second vertical edges of board height, H1, extending along the Z-axis, The boards (1) can be produced with a height (H1) of up to 2400 mm or up to 3050 mm and even up to 3600 mm measured along the Z-axis. The boards can later conveniently be cut to the desired height (H1) at the shop, as most DIY-shops offer such service. The boards (1) can have a width of the order of L1 = 600 to 1300 mm , measured along the X-axis. Of course, these values of H1 and L1 refer to the as-received boards, which can be cut to any dimensions to fit a particular situation.

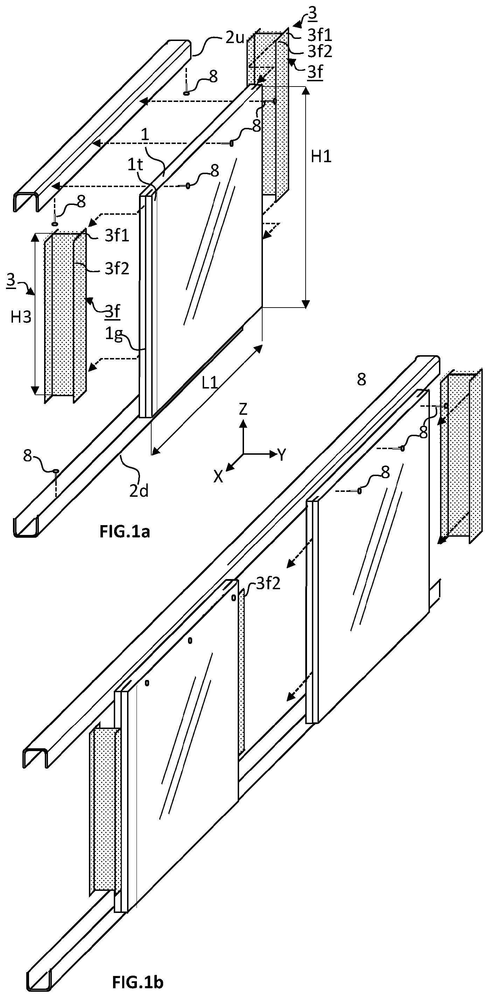

Each of the first and second vertical edges has an edge thickness, Te ≤ T, measured along the Y-axis. The embodiment wherein the edge thickness, Te, is equal to the nominal thickness, T, (i.e., Te = T) defines square edge boards, as illustrated in Figures 5a to 5c. The various dimensions of the boards (1) are identified in Figures 1a, 2a and 2b, 5a to 5d, 6, and 7a to 7f. Figure 7b is a preferred embodiment of the tapered portion geometry.

The embodiment wherein the edge thickness, Te, is smaller than the nominal thickness, T, (i.e., Te < T) defines tapered edge boards, as illustrated in Figures 2a and 2b, 5d, 6, 7a to 7f, 8c and 8d, and 9a to 9c, wherein the vertical edges are coupled to the planar portion (1f) of the front surface by a tapered portion (1t) of taper width, Lt, measured along the X-axis.

The expression "tapered portion" is construed herein as any geometry of gradually decreasing thickness from the nominal thickness, T, at the level of the planar portion (1f) to the edge thickness, Te, at the level of the vertical edges which is smaller than the thickness of the nominal thickness, T. Various non-exhaustive geometries of the tapered portion are illustrated in Figures 2a and 7a to 7f. The edge thickness, Te, of the vertical edges of tapered edge boards is preferably comprised between 8 and 45 mm, preferably between 12 and 35 mm, more preferably between 14 and 30 mm, a preferred edge thickness is comprised between 15 and 22 mm. The taper depth, (T - Te) measured along the Y-axis, is not particularly restricted by the present invention. The taper depth, Tt = T - Te, can be comprised between 0.3 and 6 mm, preferably between 0.5 and 4.0 mm, preferably between 1.0 and 2.5 mm. The taper depth, Tt, is measured as explained in §5.6.2 of EN520. Of course, the taper depth, T - Te, of square edge boards is per definition equal to 0. For example, a board (1) of nominal thickness, T = 18 mm, can have tapered portions of length, Lt = 30 mm, with a taper depth of 1.2 mm, yielding vertical edges of edge thickness, Te = 16.8 mm.

A tapered portion (1t) is provided to boards (1) to substantially reduce the visual impact caused by any offset between the front surfaces of two adjacent boards (1) of thicknesses (T) differing from one another by a thickness difference of up to 2δ, forming a step of height, Ts ≤ 2δ, measured along the Y-axis, wherein ±δ is the tolerance on the nominal thickness, T, of the boards (e.g., | δ | = 0.6 mm). When filling the gap (11g) between two adjacent boards (1) with a joint composition, the visible surface of the joint composition forms a slope of angle, *α*, with the planar portions (1f) of the boards (1), wherein the slope is defined as, tan *α* = Ts / Lj, wherein Lj is the joint length measured along the X-axis and Lj = 2Lt + L11. Even small thickness differences leading to step heights, Ts, of the order of 1 or 1.5 mm which can be comprised within tolerance boundaries for plasterboards (made of gypsum) or fibre-cement boards, can create a step which is disturbingly visible on the final drywall. To enhance the flatness of the joint portion, the slope, tan *α* = Ts / Lj, must be decreased. For a given value of Ts, the taper length, Lt (and therefore the joint length, Lj) can be increased. According to EN520, for plasterboards, the taper length, Lt = 40 to 80 mm. With the boards being aligned by the flanges of the beam at the level of the grooves (1g), however, a better planar alignment of the planar portions (1f) of two adjacent boards can be obtained independently of the nominal thicknesses, T, of the first and second boards, allowing for extending the range to ower values of the tape length, Lt, which can be comprised between 20 and 40 mm, preferably between 25 and 30 mm, more preferably Lt ≤ 28 mm. Considering a predefined value of the gap width, L11 = 3 to 7 mm, it yields for the joint length, Lj = 2Lt + L11, = 43 to 105 mm, preferably, Lj = 35 to 87 mm, more preferably 40 to 60 mm.

### The Board (1) - the grooves (1g)

The grooves (1g), extend along the Z-axis along each of the first and second vertical edges, preferably over the whole board height (H1). The grooves can have a groove width, w, measured along the Y-axis, and a groove depth, d, measured along the X-axis. The groove width, w, can be comprised between 1 and 10 mm (i.e., w = 1 to 10 mm), preferably between 1.5 and 6 mm (i.e, w = 1.5 to 6 mm) , more preferably w = 2 mm ± 0.3 mm, measured along the Y-axis. The grooves can have a groove depth, d, comprised between 8 and 60 mm, preferably between 10 and 50 mm, more preferably between 15 and 35 mm, more preferably between 15 and 25 mm, measured along the X-axis. For example, the groove depth, d, can be comprised between 8 and 15 mm.

In one embodiment, the gap width, L11, is controlled by matching the flange length, Lf, of the beam (3) and the groove depth, d, such that the first and second half-flanges (3f1, 3f2) cannot penetrate any deeper into the grooves (1g) because the first and second half-flanges abut against end-walls of the grooves, i.e., Lg = Lf, wherein Lg = 2d + L11. Since the flange length, Lf, can be controlled very accurately, in particular if the beam is made of metal, the nominal tolerance, y, on the gap width, L11, is mostly controlled by the tolerance on the groove depth, d. For this reason, it is important in this embodiment that the grooves are not formed by moulding because of a poor dimensional control, but instead the grooves must be formed by machining, preferably by milling, to accurately control the groove depth, d, of the groove (1g) and thus reduce the nominal tolerance, y, on the gap width, L11. In the embodiment wherein Lg = Lf (wherein Lg = 2d + L11), it is preferred that the groove depth, d = 8 to 60 mm, more preferably d = 10 to 30 mm, more preferably, d = 12 to 20 mm. By selecting a predefined value of the gap width, L11 = 3 to 7 mm and introducing the foregoing values for the groove depth, d, yields the groove span, Lg = 2s + L11 = 19 to 127 mm, preferably Lg = 21 to 55 mm, more preferably Lg = 25 to 40 mm.

As explained in continuation, the grooves (1g) must be dimensioned such as to snugly engage the half-flanges (3f1, 3f2) of the beams (3), preferably opposing a moderate friction against the introduction of a flange into the groove. By fully engaging the first half-flange (3f1) of the beam (3) into a groove (1g) of a first board (1) until the first half-flange (3f1) cannot penetrate any further, and by fully engaging the second half-flange (3f2) of the beam (3) into a groove (1g) of a second board (1) until the second half-flange cannot penetrate any further, a portion of permanent drywall is formed with a gap (11g) between first and second boards, of gap width, L11, having a predefined value within a very low nominal tolerance, ±*γ*, wherein |*γ*| ≤ 0.6 mm, preferably |*γ*| ≤ ±0.4 mm, more preferably, |*γ*| ≤ ±0.2 mm. According to the present invention, the first and second half-flanges (3f1, 3f2) cannot penetrate any further into the corresponding grooves, thus fixing the value of the gap width, L11, because the first and second half-flanges (3f1, 3f2) abut against end-walls of the grooves and / or the vertical edges of the boards abut against the web (3w) of the beam (3).

The nominal tolerance, *γ*, on the gap width, L11, shown in Figure 10a can be determined by measuring the gap width, L11, on a representative number of gaps (11g) separating two boards (1). In practice, as illustrated in Figure 10b, the nominal tolerance, *γ*, on the gap width, L11, is determined by measuring the gap width, L11, at 3 points (3.i1-3.i3) of each of three gaps (11gi, i = 1 to 3) between four adjacent boards (1.1 to 1.4), to yield nine values (Mij, with i = 1 to 3 grooves and j = 1 to 3 points on a groove) of the gap width, L11. The values (Mij) thus measured are averaged to yield the gap width, L11, and the standard deviation is determined and defined as the nominal tolerance, *γ.*

The distance, Tg, separating the groove (1g) from the planar portion of the front surface measured along the Y-axis can be comprised between 30 and 70% of the nominal thickness, T (i.e., Te = 0.3 T to 0.7 T).

### BEAMS (3)

As shown in Figures 1a to 1c, the beams (3) are used as struts aligned along the Z-axis to couple two-by-two adjacent boards (1) arranged side-by-side in a row by engaging the first and second half-flanges (3f1, 3f2) of the first flange (3f) in the grooves (1g) of the adjacent vertical edges of the first and second boards (1). The gist of the present invention is that by fully engaging the first and second half-flanges (3f1, 3f2) into the corresponding grooves (1g) until they cannot penetrate any deeper, the gap (11g-separating the two boards (1) is automatically set to the predefined value of the gap width, L11, within the nominal tolerance, y.

The beams (3) can be coupled to a top and / or a bottom U-profile track (2u, 2d) but this is not even necessary. Consequently, the beam (3) can have a height (H3) measured along the Z-axis which is smaller than the distance separating the top and bottom U-profile tracks (2u, 2d). For example, the beam height, H3, can be comprised between 50 and 300 cm, preferably between 100 and 250 cm, more preferably between150 and 230 cm, depending on the height, H1, of the boards (1). High height ratios, H3 / H1, of the beam height, H3, to the board height, H1, contribute to reinforcing the mechanical properties of the drywall. For example, the height ratio, H3 / H1 > 50%, preferably H3 / H1 > 70% or > 85%. The height ratio, H3 / H1, is preferably smaller than 100%, preferably smaller than 90% to facilitate the engagement of the half-flanges (3f1, 3f2) into the corresponding grooves (1g) over the whole flange height, H3. It is preferred that the groove width, w, and thicknesses of the first and second half-flanges (3f1, 3f2) be so dimensioned along the Y-axis that the half-flanges can penetrate into the groove (1g) with a sufficient friction to hold the beam in place when the first half-flange (3f1) is fully inserted in the groove (1g) of the first board (1) (i.e., until the half-flange cannot penetrate any deeper into the groove). The first and second half-flanges therefore have a flange thickness, Tf, substantially equal to, slightly lower than the groove width, w. To facilitate insertion of the half-flanges into the grooves, the free ends of the half-flanges can be tapered relative to the Y-axis. The flange length, Lf, can be comprised between 16 and 150 mm, preferably between 20 and 70 mm, more preferably between 24 and 50 mm.

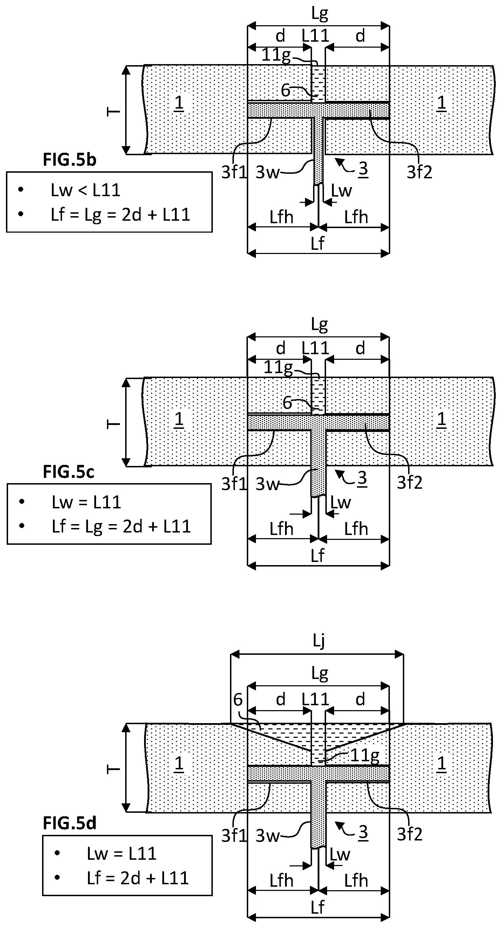

The first and second half-flanges (3f1, 3f2) are preferably identical, and the first and second grooves (1g) of all plates are also preferably identical, so that the beam can be used in any orientation, with any half-flange (3f1, 3f2) fitting any groove (1g). In the embodiment wherein, Lw = L11, illustrated in Figures 5a, 5c, and 5d, the half-flange length, Lfh, can be smaller than or equal to the sum of the groove depth, d; and half the gap width, Lg, (i.e., Lfh ≤ d + ½ L11). By contrast, in the embodiment wherein, Lf = Lg, illustrated in Figures 5b, 5c, and 5d, the half-flange length, Lfh, must be equal to the sum of the groove depth, d; and half the gap width, Lg, (i.e., Lfh = d + ½ L11). The half-flanges (3f1, 3f2) preferably have a length, Lfh, defined as, 8 ≤ Lfh ≤ 75 mm, preferably, 10 ≤ Lfh ≤ 30 mm, more preferably 12 ≤ Lfh ≤ 20 mm, whose values must match the values of the groove depth, d, depending on the embodiment.

The beam (3) comprises a web (3w) and two half-flanges (3f1, 3f2) extending on either side of the web, forming a first flange (3f) at a first end of the web and thus a T-profile as shown in Figures 3a and 9a. The beam (3) can also comprise a second flange at the other end of the web (3w). The second flange can comprise one half-flange forming a h-profile as shown in Figures 3c and 9c (right insert), or two half-flanges, forming an I-profile as shown in Figures 3b, 9b and 9c (right insert). A T-profile is suitable for building a permanent wall lining as illustrated in Figure 9a, whilst an I-profile and a h-profile can be used for both permanent wall linings and partition walls. As shown in Figures 9b and 9c, the I-profile is particularly advantageous for building partition walls with two rows of boards (1) coupled to both sides of the top and / or bottom U-profile tracks (2u, 2d), with the grooves (1g) of two adjacent boards (1) on one side of the U-profile tracks being coupled to the first flange (3f) of the same beam (3) whose second flange is inserted in the grooves of two adjacent boards (1) on the other side of the U-profile tracks. This way, less to no screws are required to fix the boards to the top or bottom U-profile tracks (2t, 2d). As shown by comparing the two inserts of Figure 9c, the I-profile or the h-profile can be used to build a partition wall with beams (3) spaced apart from one another by a distance smaller than the longitudinal length, L1, of the boards.

The top and bottom U-profile tracks (2u, 2d) are preferably identical to one another. For partition walls, their width measured along the Y-axis of the top and bottom U-profile tracks (2u, 2d) is determined by the height, Tw, of the web (3w) of the I-profile beam (3) so that when boards are coupled with their grooves engaging the first half-flange (3f1) of both first and second flanges, the two boards are pressed against each side of the top and bottom U-profile tracks (2u, 2d) (cf. Figures 9b and 9c).

### PORTION OF A PERMANENT DRYWALL

A portion of a permanent drywall can be built with the kit-of-parts of the invention in the following manner. The top U-profile tracks (2u) can be fixed in a row extending along the X-axis to a top position with screws (8), preferably a ceiling, and the bottom U-profile tracks (2d) can be fixed in a row extending along the X-axis to a bottom position with screws (8), preferably a floor, in alignment along the Z-axis with the top U-profile tracks (2u), as shown in Figure 1a. The first board (1) can be fixed to the top U-profile track (2t) with screws (8), or any other manner- as shown in Figure 1b. The first half flange (3f1) of the first flange (3f) of a first beam (3) is inserted into a groove (1g) of the first board (1) until it cannot penetrate any further. The second board (1) is positioned next to the first board, with the second half-flange (3f2) of the first flange (3f) inserted in a groove (1g) of the second board (1) until it cannot penetrate any further, such that, as shown in Figure 1c, the vertical edges of the first and second boards (1) are parallel and separated from one another by a gap (11g) of predefined gap width, L11 > 0, controlled within a predefined nominal tolerance, *γ*, preferably L11 = 3 to 7 mm, more preferably, L11 = 4 to 6 mm, more preferable L11 = 4.5 to 5.5 mm or most preferablyL11 = 5 mm, and the nominal tolerance, *γ*, is preferably not more than 0.6 mm, preferably not more than 0.4 mm, more preferably not more than 0.3 mm, more preferably not more than 0.2 mm or even not more than 0.1 mm (i.e., *γ* ≤ 0.6 mm, or *γ* ≤ 0.4 mm, or *γ* ≤ 0.3 mm, or *γ* ≤ 0.2 mm, or *γ* ≤ 0.1 mm). The second board (1) can be fixed to the top U-profile tracks (2u) with screws (8) or any other manner (e.g., adhesive or double side tape (8a)). The first and second boards are thus held side by side separated from one another by a gap (11g) of well-defined and controlled gap width, L11, to form a portion of permanent drywall. The automatic control of the predefined value of the gap width, L11, when mounting the boards as discussed supra to form a drywall has the great advantage that all gaps (11g) are similar and can be filled in an optimised and reproducible manner with the joint composition (6) to yield an optically smooth surface, without dips and with good crack resistance to dimensional variations, compared with gaps (11g) of uncontrolled gap widths, L11, which can be larger or smaller than the predefined value.

### CONTROL OF THE GAP WIDTH, L11

The gap width, L11, is automatically controlled without efforts within the predefined nominal tolerance, y, either,
- as illustrated in Figure 5a, by dimensioning the web thickness, Lw, to be substantially equal to the gap width, L11 (i.e., Lw = L11) and, at the same time, the flange length, Lf, is smaller than a groove span, Lg, equal to a sum of the gap width, L11, and twice the groove depth, d, (i.e., Lf < Lg = L11 + 2d), or
- as illustrated in Figure 5b, by dimensioning the flange length, Lf, to be substantially equal to the groove span Lg, (i.e., Lf = Lg = L11 + 2d), and the web thickness, Lw, to be smaller than the gap width, L11 (i.e., Lw < L11), or
- as illustrated in Figure 5c, by dimensioning the flange length, Lf, to be substantially equal to the groove span, Lg, (i.e., Lf = Lg = L11 + 2d) and, at the same time, the web thickness, Lw, to be substantially equal to the gap width, L11 (i.e., Lw = L11).

### Web thickness, Lw, equals the gap width, L11 (i.e., Lw = L11)

As shown in Figures 5a, 5c, and 5d, the gap width, L11, can be controlled by dimensioning the web thickness, Lw, to be equal to the desired gap width, L11. The grooves of the boards are engaged on each of the first and second half-flanges (3f1, 3f2) of the first web (3f) of a beam (3) until the board edges abut against each side of the web (3w) of the beam (3), thus being separated by a gap width, L11 = Lw.

The first-flange (3f) must have a length, Lf, which cannot be larger than the groove span, Lg, to prevent the first and second half-flanges (3f1, 3f2) from abutting against the end walls of the grooves (1g) of the corresponding boards (1) before the board edges can reach the web (3w) of the beam (3). The embodiment wherein Lf < Lg, is illustrated in Figure 5a. This embodiment has the advantage that the groove geometry needs not be controlled as accurately as in other embodiments, as long as the groove depth, d, is sufficient to house the half-flanges without contacting the end walls of the grooves. On top of machining (e.g., milling) the grooves, in this embodiment, the grooves (1g) can alternatively be formed during moulding of the boards, which has less control on the groove depth, d (i.e., the nominal tolerance, y, is higher than achieved by machining).

The embodiment wherein both conditions, L11 = Lw and, at the same time, Lf = Lg is illustrated in Figures 5c and 5d. There is a double control of the gap width, L11, at the level of the web thickness, Lw = L11, and at the level of the flange length vs groove span, Lf = Lg. In this case, the geometry, in particular the groove depth, d, of the grooves must be controlled accurately. This can be achieved by machining, e.g., milling the grooves (1g).

In this embodiment, Lw = L11, the web thickness, Lw, has the same preferred dimensions than the predefined values of the gap width, L11. Consequently, the preferred web thickness, Lw = 3 to 7 mm, preferably, Lw = 4 to 6 mm, more preferably, Lw = 4.5 to 5.5 mm, more preferably, Lw = 5 mm. Controlling with accuracies of the order of |*γ*| ≤ 0.4 mm or of |*γ*| ≤ 0.2 mm or even of |*γ*| ≤ 0.1 mm can easily be achieved with beams (3) made of metal, and with boards (1) having smooth vertical edges.

One advantage of this embodiment is that the web thickness, Lw, can be controlled with great accuracy, especially if the beams are made of metal. One possible inconvenient of this embodiment is that the web thickness, Lw, is imposed by the groove depth, L11, rather than by mechanical considerations. This means that if the mechanical properties of a beam having a web of thickness, Lw = L11, imposed by the desired gap width, L11, which is too low, then the drywall will not have the desired mechanical properties, or which is too high, then the beam is over-dimensioned, increasing the weight (inconvenient for transportation) and the cost of the kit accordingly.

### The flange length, Lf, equals the groove span, Lg (i.e., Lf = Lg)

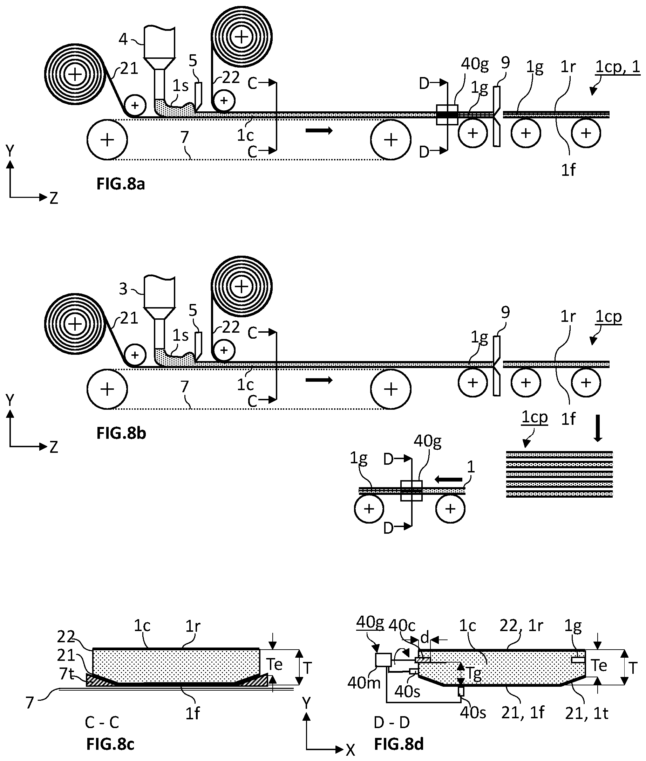

As shown in Figures 5b to 5d, the gap width, L11, can be controlled by dimensioning the first flange, such that when the first and second half-flanges (3f1, 3f2) abut against the end walls of the corresponding grooves, the gap (11g) between the two boards (1) has the predefined value of L11. In this embodiment, the groove depth, d, of the grooves must be controlled accurately. Nominal tolerances, *γ*, of the order of |*γ*| ≤ 0.6 mm or |*γ*| ≤ 0.4 mm, or |*γ*| ≤ 0.3 mm, or |*γ*| ≤ 0.2 mm, on the groove depth, d, can be achieved by machining, e.g., milling the grooves (1g) as illustrated in Figure 8d.

For obvious reasons, the web thickness, Lw, cannot be larger than the predefined value of L11. In case of beams (3) made of metal, e.g., steel, this is not a problem, as web thicknesses, Lw, of the order of 2 to 3 mm are more than sufficient for the vast majority of applications. The embodiment wherein Lw < L11 is illustrated in Figure 5b. The control of the gap width, L11, relies exclusively on the match between the first flange length, Lf, and the groove span, Lg (i.e., Lf = Lg).

In this embodiment, the preferred flange length, Lf = Lg, can be determined with respect to the preferred ranges of the groove depth, d, and the predefined gap depth, L11, since Lg = 2d + L11. For example, with a groove depth, d = 8 to 60 mm, preferably d = 10 to 30 mm, more preferably, d = 12 to 15 mm and a gap width, L11 = 4 to 7 mm, more preferably, L11 = 4.5 to 5.5 mm, more preferably, L11 = 5 mm, the preferred flange length, Lf, can be comprised between 19 and 127 mm, preferably between 21 and 55 mm; more preferably between 25 and 30 mm. The half-flange lengths, Lfh = ½ Lf.

The embodiment wherein both Lf = Lg and Lw = L11 is illustrated in Figures 5c and 5d, giving double control on the accuracy of the gap width, L11. The embodiment of Figure 5d is more likely to occur as boards (1) with a tapered portion (1t) of taper length, Lt, are commonly used to reduce the slope formed by the visible surface of the joint composition (6) in case of an offset, Ts, between the positions of the planar portions (1f) of two adjacent boards (1).

### PARTITION WALL AND WALL LINING

The top and bottom U-profile tracks (2u, 2d) are separated from one another by a distance substantially equal to a height (H1) of the boards (1) measured along the Z-axis. The top U-profile tracks (2u) are fixed side by side in a row to a top position extending along the X-axis with the U- opening facing towards a bottom position. The bottom U-profile tracks (2d) are fixed side by side in a row to the bottom position extending along the X-axis with the U-opening facing towards the top position. In many instances, wherein a partition wall must divide a large room into two smaller rooms, extending from floor to ceiling, the top position is a ceiling of the large room and the top U-profile tracks (2u) are fixed to the ceiling. The bottom position is a floor of the large room and the bottom U-profile tracks (2d) are fixed to the floor. The top and bottom U-profile tracks (2u, 2d) are preferably aligned side by side along the X-axis defining the position of the partition wall or wall lining. In special cases the top and bottom U-profile tracks may define a broken line. But this depends on the wishes of the builder and does not restrict the present invention. The top and bottom U-profile tracks (2u, 2d) can be fixed to the ceiling and floor with screws, an adhesive, double-sided tapes, and the like.

A wall lining as illustrated in Figure 9a can be built by simply repeating the steps described supra with respect to the portion of permanent drywall comprising two boards aligned side-by-side, to align as many boards as required to complete the wall lining. For permanent wall linings, the beams (3) can be T-profiles as shown in Figure 9a. The wall lining is thus independent of the wall (11) to be hidden, which can be advantageous, e.g., in case the wall (11) must be insulated or has such an irregular surface that it would not be possible to build a straight drywall fixed to the wall (11). If the beams are not fixed to the wall (11), the boards must be fixed to the top and / or bottom U-profile tracks (2u, 2d) with anyone of screws, nails, an adhesive, double-sided tapes, and the like. Alternatively, the beams (3) can be h-profiles or I-profiles, with one or two half-flanges forming the second flange at the opposite end of the web (3w) from the first flange (3f) as illustrated in Figures 9b and 9c. The half-flange(s) of the second flange can serve to fix the beams (3) with screws or nails to the wall (11) hidden by the wall lining. If the second flange of the beams (3) are fixed to the wall (11), the boards (1) need not necessarily be fixed to the top and bottom U-profile tracks.

As illustrated in Figures 1c and 9b and 9c, a partition wall comprises boards (1) aligned side-by-side on both sides of the top and bottom U-profile tracks (2u, 2d). In a first embodiment, illustrated in Figure 9b, the boards (1) at one side of the top and bottom U-profile tracks are arranged face-to-face with the boards (1) at the second side of the top and bottom U-profile tracks. As can be seen in Figure 9b, in this embodiment, a same I-profile beam (3) couples two boards side-by-side on both sides of the top and bottom U-profile tracks by engaging both first and second flanges into the corresponding grooves (1g). This has the effect that the drywall thickness measured along the Y-axis is determined by the web length, Tw, of the web (3w) and the boards need not be extensively fixed to the top and bottom U-bottom tracks. This also has the effect that the beams (3) are separated from one another along the X-axis by a distance of about the length, L1, of the boards (1). Care must be taken that the distance between beams (3) be adequate for the desired mechanical properties of the partition wall.

In an alternative embodiment illustrated in Figure 9c, the boards aligned at one side of the top and bottom U-profile tracks are arranged offset with respect to the boards (1) at the second side of the top and bottom U-profile tracks. Preferably, as illustrated in Figure 9c, the boards at one side are offset relative to the boards at the other side of the U-profile tracks along the X-axis by half the length, L1/2, of the boards (1). The beams contacting the rear surface (1r) of a board can be coupled to one another with an adhesive or a double sided adhesive tape (8a). This embodiment allows using boards of larger dimensions, L1, along the X-axis, while aligning enough beams (3) to yield the required mechanical properties of the permanent partition wall.

### PROCESS FOR PRODUCING A PLASTERBOARD

The present invention also concerns a process for producing a plasterboard as described supra. The process comprises the following steps, illustrated in Figures 8a and 8b. A gypsum slurry (1s) comprising stucco, water, and additives is fed onto a bottom facer (21) laid on a conveyor (7) in motion. The bottom facer (21) corresponds to the front surface of the plasterboard thus produced. A levelling blade (5) controls the thickness of the layer of slurry deposited onto the bottom facer (21). A top facer (22) is applied onto a free surface of the gypsum slurry to form a sandwich structure with a core (1c) made of the gypsum slurry sandwiched between the top and bottom facers (21, 22). The top facer (22) corresponds to the rear surface (1r) of the plasterboard thus produced. The gypsum slurry (1g) forming the core (1c) is allowed to set by hydration to form a setting board on the conveyor. The setting board is cut at a cutting station (9) to desired dimensions, H1, to yield cut boards (1cp) and the cut boards (1cp) are dried in a drying station (not shown) to yield plasterboards.

The plasterboards preferably comprise tapered portions (1t) which can be formed as follows. The formation of the tapered portions (1t) is advantageously achieved during the feeding of the slurry onto the bottom facer (21), with the conveyor (7) having a geometry comprising raised edges forming the tapered portions (1t). This embodiment is illustrated in Figure 8c, with prismatic inserts (7t) coupled to the conveyor (7) form the tapered portions (1t) with desired geometry as the slurry is being fed. Another option is to machine the square edges of the setting board or of the cut boards (1cp) or of the plasterboards obtained with a flat conveyor (7) to form the tapered portions with desired geometry. This solution, however, requires an additional process stage and generates considerable amounts of dust and loss of material. Furthermore, machining the tapered portions (1t) removes the bottom facer (21) from the tapered portions (1t), exposing the gypsum core (1c) at the tapered portions (1t) of the thus produced boards (1).

After the setting of the gypsum slurry, the grooves (1g) are formed by machining with a rotating cutting tool (40c) along each vertical edge of the setting board or of the cut boards (1cp) or of the plasterboards. As illustrated in Figure 8d, the grooves (1g) are preferably formed by milling. The machining tool (40g) is preferably a milling tool. The machining tool (40g) comprises a motor (40m) configured to drive the rotation of the cutting tool, preferably the milling cutter. It is essential that the position of the cutting tool (40c) be controlled relative to the position of the vertical edge along the X-axis to control the groove depth, d, within the preselected nominal tolerance, *γ*, on the groove depth, d. A measuring system (40s) can be used to ensure that the cutting tool penetrates through the vertical edge to a penetration depth equal to the predefined groove depth, d, within the predefined nominal tolerance, *γ*.

It is preferred that the position of the cutting tool (40c) be also controlled relative to the planar portion (1f) of the front surface. Another measuring system (40s) can be used to ensure that the distance, Tg, between the groove (1g) being formed by the cutting tool (40c) and the planar portion (1f) be within a preselected nominal tolerance, *ε*, on the distance, Tg.

As shown in Figure 8a, the grooves (1g) can be formed in line by installing the machining tool (40g) for forming the grooves (1g) upstream of the cutting station (9) (upstream is defined with respect to the direction of the conveyor (7)). This embodiment has a clear advantage of efficacy. Care must be taken, however, to account for possible dimension variations upon drying the boards (1), in particular for possible variations of groove depth, which can, however, be predicted with accuracy. In an alternative embodiment, illustrated in Figure 8b, the grooves (1g) are formed after the setting board was cut into individual cut boards (1cp) and dried. This embodiment adds a separate stage to the process but has the advantage of requiring no amendments to an existing production line and of cutting the grooves on boards having their final dimensions after drying.

### CONCLUDING REMARKS

Permanent drywalls according to the present invention are simple to install by unexperienced DIYers. In particular, the recurrent issue of repeatedly controlling the gap width, L11, is solved without any further action required by the operator, who simply has to push the half-flanges (3f1, 3f2) as deep as possible into the corresponding grooves, until the beam (3) abuts against tbe vertical edge and / or against the end walls of the grooves. This has the advantage that the gap width, L11, can be repeatedly optimised without effort, which facilitates the application of the joint composition (6) to fill in the gap (11g) and preferably the tapered portions (1t) of the boards to yield a smooth surface rendering the positions of the gaps invisible to the naked aye after painting or applying a wall paper. Consequently, the building of a visually smooth and planar permanent drywall is substantially facilitated with the present invention.

| **REF** | **FEATURE** |
|---|---|
| 1 | Board |
| 1cp | Cut board |
| 1e | Board edge |
| 1f | Planar portion |
| 1g | Groove |
| 1PA | Prior art board |
| 1r | Rear surface |
| 1s | Gypsum slurry |
| 1t | Tapered portion |
| 2d | Bottom U-profile track |
| 2u | Top U-profile track |
| 3 | Beam |
| 3f | First flange |
| 3f1 | First half-flange |
| 3f2 | Second half-flange |
| 3w | Web |
| 4 | Source of gypsum slurry |
| 4g | Gypsum slurry |
| 5 | Levelling blade |
| 6 | Joint composition |
| 7 | Conveyor |
| 8 | Screw |
| 8a | Double coated adhesive stripe |
| 9 | Cutting station |
| 10R | Reference plane for plates alignment |
| 11 | Wall |
| 11g | Gap between two boards |
| 21 | Top facer |
| 22 | Bottom facer |
| 40c | Cutting tool |
| 40g | Groove forming apparatus |
| 40m | Motor of cutting tool |
| 40s | Measuring system |
| d | Groove depth (X-axis) |
| L11 | Gap width (X-axis) |
| Lf | First flange length Tapered portion length (X-axis) |
| Lg | 2d + L11 |
| Lh | Half-flange length (X-axis) |
| Lj | Joint width, Lj = 2Lt + L11 |
| Lr | Ruler length |
| Lt | Taper width of the tapered portion (X-axis) |
| Lw | Web thickness (X-axis) |
| T | Nominal thickness (Y-axis) |
| Te | Edge thickness (Y-axis) |
| Tf | Flange thickness (Y-axis) |
| Tg | Distance of the groove to planar portion (Y-axis) |
| Ts | Offset between planar portions of first and second boards (Y-axis) |
| Tt | Depth of tapered portion (Y-axis) |
| Tw | Web length (Y-axis) |
| W | Groove width (Y-axis) |
| *α* | Offset angle between two boards |
| *δ* | Tolerance on nominal thickness T (Y-axis) |
| *ε* | Nominal tolerance on groove to planar portion distance, Te (Y-axis) |

## Claims

1. A kit-of-parts for forming a portion of a continuously smooth permanent drywall, comprising,
• first and second boards (1) each board having a rectangular geometry and comprising,
o a front surface comprising a planar portion (1f) parallel to a wall plane (X, Z) and separated from a rear surface (1r) parallel to the wall plane (X, Z) by a nominal thickness, T, measured along a Y-axis normal to the wall plane (X, Z),
o a peripheral edge defining the rectangular geometry and comprising first and second longitudinal edges of length, L1, extending along the X-axis, normal to and separated from one another by first and second vertical edges of board height, H1, extending along the Z-axis, and wherein
∘ a groove (1g), extending parallel to the wall plane (X, Z) along each of the first and second vertical edges, each groove having an opening width, w, measured normal to the wall plane (X, Z), and a depth, d, measured parallel to the longitudinal axis (X),
• a beam (3) comprising a web (3w) normal to and centred on a first flange (3f) and optionally to a second flange forming a T-profile or a I-profile, or a h-profile, wherein,
∘ the first flange (3f) has a length, Lf; measured along the X-axis and has a thickness, Tf, measured along the Y-axis substantially equal to the opening width, w, of the grooves (1g) of the first and second boards (1), such as to fit snugly in the grooves (1g) of each of the first and second boards (1), and
∘ the web (3w) has a thickness, Lw, measured along the X-axis,
wherein the first flange (3f) of the beam (3) comprises a first half-flange (3f1) of length Lfh and configured to snugly fit in the groove (1g) of the first board and comprises a second half-flange (3f2) of length Lfh and configured to snugly fit in the groove (1g) of the second boards (1), such that the planar surfaces (1f) of the first and second boards are substantially planarly aligned and wherein the vertical edges of the first and second boards are parallel to one another and separated from one another by a gap (11g) of width, L11, measured along the X-axis,
**characterized in that,** the grooves (1g) of the first and second boards (1) and the beam (3) are so dimensioned as to ensure that the gap width, L11, is repeatedly controlled to reach a predefined value L11 within a nominal tolerance, *γ* ≤ ±0.6 mm, preferably *γ* ≤ ±0.4 mm, more preferably, *γ* ≤ ±0.2 mm, and wherein the predefined value of L11 is comprised between 3 and 7 mm, preferably between 4 and 6 mm.

2. Kit-of-parts according to claim 1, wherein each one of the first and second boards (1) comprises a core (1c) comprising either at least 50 wt.% of calcium sulphate dihydrate relative to the core weight thus defining a plasterboard, preferably the plasterboard comprises at least 80 wt.% of calcium sulphate dihydrate, or the core comprises at least 50 wt.% of calcium silicate, or made of fibre-cement.

3. Kit-of-parts according to claim 1 or 2, wherein each one of the first and second boards (1) is a plasterboard comprising at least 70 wt.% gypsum, preferably at least 80 wt.% of gypsum relative to the total weight of the plasterboard, and has a density comprised between 0.5 and 1.2 g / cm³, preferably between 0.6 and 0.8 g / cm³.

4. Kit-of-parts according to anyone of the preceding claims, wherein the grooves (1g) of the first and second boards (1) and the beam (3) are dimensioned as follows,
• The web thickness, Lw, is substantially equal to the gap width, L11 (i.e., Lw = L11) and the flange length, Lf, is smaller than a groove span, Lg, equal to a sum of the gap width, L11, and twice the groove depth, d, (i.e., Lf < Lg = L11 + 2d), or
• The flange length, Lf, is substantially equal to the sum of the gap width, L11, and twice the groove depth, d, (i.e., Lf = Lg = L11 + 2d), and the web thickness, Lw, is smaller than the gap width, L11 (i.e., Lw < L11), or
• The flange length, Lf, is substantially equal to the sum of the gap width, L11, and twice the groove depth, d, (i.e., Lf = Lg = L11 + 2d), and the web thickness, Lw, is substantially equal to the gap width, L11 (i.e., Lw = L11).

5. Kit-of-parts according to anyone of the preceding claims, wherein the flange length, Lf, is comprised between 16 and 150 mm, preferably between 20 and 70 mm, more preferably between 24 and 50 mm and the groove depth, d, is comprised between d = 10 to 30 mm, more preferably d = 12 to 20 mm.

6. Kit-of-parts according to anyone of the preceding claims, wherein each of the first and second vertical edges of the first and second boards (1) has an edge thickness, Te < T, measured along the Y-axis and is coupled to the planar portion (1f) of the front surface by a tapered portion (1t) of taper width, Lt, measured along the X-axis.

7. Kit-of-parts according to claim 6, wherein
• the edge thickness, Te, is comprised between 8 and 45 mm, preferably between 12 and 35 mm, more preferably between 14 and 30 mm, a preferred edge thickness is comprised between 15 and 22 mm, and / or wherein
• the distance, Tg, separating the groove (1g) from the planar portion of the front surface measured along the Y-axis is comprised between 30 and 70% of the nominal thickness, T (i.e., Tg = 0.3 T to 0.7 T).

8. Kit-of-parts according to claim 6 or 7, wherein the groove width, w, is comprised between 1 and 10 mm, preferably between 1.5 and 6 mm, more preferably 2 mm ± 0.3 mm.

9. A portion of a continuously smooth permanent drywall comprising the elements of the kit-of-parts of anyone of the preceding claims assembled as follows,
• the first half-flange (3f1) of the beam (3) is fully inserted into the groove (1g) of the first board (1) until it cannot penetrate any further,
• the second half-flange (3f2) of the beam (3) is fully inserted into the groove (1g) of the second board (1), until it cannot penetrate any further,
such that the first and second boards are held side by side with a vertical edge of the first board (1) being parallel to and separated from a vertical edge of the second board (1) by a distance, L11, of a given value comprised between 3 and 7 mm, preferably between 4 and 6 mm and within the nominal tolerance, tolerance, | *γ* | ≤ 0.4 mm, preferably, | *γ* | ≤ 0.4 mm, more preferably, | *γ* | ≤ 0.2 mm.

10. Method for installing a permanent partition drywall or permanent wall lining extending along an X-axis, comprising the following steps,
• providing a kit-of-parts according to any one of claims 1 to 8,
• fixing side by side one or more top U-profile tracks (2u) to a top position, extending along the X-axis with the U- opening facing towards a bottom position,
• fixing side by side one or more bottom U-profile tracks (2d) to the bottom position, preferably to a floor, extending along the X-axis with the U-opening facing towards the top position, and aligned relative to the Z-axis with the one or more top U-profile tracks (2u),
• positioning the first board (1) against a first side of one of the one or more top U-profile tracks (2u) and against a first side of one of the one or more bottom U-profile tracks (2b) with the planar portion (1f) facing away from the top and bottom U-profile tracks (2t, tb), and optionally fixing the first board (1) to the first side of the top U-profile track (2u),
• fully engaging the first half-flange (3f1) of the beam (3) into the groove (1g) of the first vertical edge of the first board (1), until it cannot penetrate any further
• positioning the second board (1) with the first vertical edge thereof next to the first vertical edge of the first board, against the first side of one of the one or more top U-profile tracks (2u) and against the first side of one of the one or more bottom U-profile tracks (2b) with the planar portion (1f) facing away from the top and bottom U-profile tracks (2t, tb), and with the second half-flange (3f2) of the beam (3) fully engaged in the groove (1g) of the first vertical edge of the second board (1) until it cannot penetrate any further, to form a permanent drywall portion made of first and second boards separated from one another by a gap (11g) of the given value L11 comprised between 3 and 7 mm, preferably between 4 and 6 mm and within the nominal tolerance, *γ* ≤ ±0.4 mm, preferably, *δ* ≤ ±0.2 mm,
• optionally fixing the second board (1) to the top U-profile track (2u),
• Repeating the foregoing steps until the permanent partition drywall or permanent wall lining is completed.

11. Method for installing a permanent partition drywall according to claim 10, wherein the beam is in the form of a I-profile or a h-profile with first and second flanges separated by the web (3w), and wherein the same steps as in claim 9 are repeated on a second side of the top and bottom U-profile tracks (2u, 2b) to form a permanent drywall.

12. Process for producing a plasterboard as defined in anyone of claims 2 to 8, comprising
• feeding a gypsum slurry (1s) comprising stucco, water, and additives onto a bottom facer (21) laid on a conveyor (7) in motion,
• applying a top facer (22) onto a free surface of the gypsum slurry to form a sandwich structure with a core (1c) made of the gypsum slurry sandwiched between the top and bottom facers (21, 22),
• setting by hydration the gypsum slurry (1g) forming the core (1c) to form a setting board on the conveyor,
• cutting the setting board to desired dimensions to yield cut boards (1cp),
• drying the cut boards in a drying station (11) to yield the boards (1),
**characterized in that,** after the setting of the gypsum slurry the grooves (1g) are formed by machining with a rotating cutting tool (40c), preferably by milling, along each vertical edge of the setting board or of the cut boards (1cp) or of the boards (1), by controlling the distance of the cutting tool (40c) relative to the vertical edge to ensure that the groove depth, d, has a predefined value such that a difference, Lf - 2d, between the flange length, Lf, of the beam (3) and twice the groove depth, d, is equal to the gap width, L11, within the predefined nominal tolerance, *γ,* on the gap width (i.e., Lf - 2d = L11 ±*γ*)*.*

13. Process according to claim 12 wherein the grooves (1g) are formed by milling with a milling cutter (40c) whose position along the X-axis relative to the vertical edge is controlled by a measuring system (40s).
